# FASCICULE DE BREVET EUROPEEN

(11) **EP 2 142 948 B1**
(45) Date de publication et mention de la délivrance du brevet: **13.06.2018**
(21) Numéro de dépôt: 08788191.8
(22) Date de dépôt: 16.04.2008
(51) Int. Cl.: E06B 9/24, G02B 5/18

(54) **ENSEMBLE DE SOUS-RESEAUX DIFFUSANT LA LUMIERE**
ARRAY AUS LICHTSTREUENDEN UNTERGITTERN
ARRAY OF LIGHT-DIFFUSING SUB-GRATINGS

(30) Priorité: 04.05.2007 FR 0754878
(43) Date de publication de la demande: 13.01.2010
(73) Titulaire: Saint-Gobain Glass France, 92400 Courbevoie (FR)
(72) Inventeur: GUERING, Paul-Henri, F-75013 Paris (FR); MENEZ, Ludivine, F-75004 Paris (FR); MULET, Jean-Philippe, F-94300 Vincennes (FR)
(74) Mandataire: Saint-Gobain Recherche
(86) Numéro de dépôt international: PCT/FR2008/050678
(87) Numéro de publication internationale: WO 2008/145896

(56) Documents cités:
- JP-A- 59 099 219
- US-A- 4 502 756
- US-A- 5 009 484
- US-A- 6 094 306

## Description

L'invention concerne le domaine des vitrages pour bâtiment comprenant des éléments capable de rediriger la lumière venant de l'extérieur dans une direction souhaitée à l'intérieur, généralement le plafond. Ce type de vitrage est généralement qualifié de « Daylighting » lorsque c'est la lumière solaire visible que l'on cherche à dévier.

Ce type de vitrage est généralement considéré comme contribuant à économiser l'énergie du fait de l'utilisation plus efficace en intérieur de lumière extérieure, ce qui permet de réduire l'éclairage artificiel.

Le US5009484 enseigne un vitrage comprenant en surface un réseau de diffraction constitué de traits parallèles en relief. Ce document enseigne que le réseau mène habituellement à une diffraction de la lumière se traduisant par une séparation de couleurs. Cet effet n'est pas forcément souhaité. Pour limiter l'ampleur de ce phénomène, ce même document préconise (voir sa figure 3) de juxtaposer verticalement trois réseaux successifs pour chacune des trois couleurs fondamentales, les faisceaux émergents de ces trois couleurs devant se mélanger de nouveau au plafond pour reformer une zone éclairée incolore. Les trois réseaux successifs présentent des périodicités différentes, variant de façon monotone et selon un ordre précis. Ce document enseigne également que ces trois réseaux successifs peuvent être remplacés par un réseau unique dont la périodicité évolue de façon monotone de l'une à l'autre des extrémités de ce réseau unique. Les solutions enseignées par ce brevet fonctionnent quelque peu mais n'empêchent pas toute formation d'irisations. De plus, dans ce document, les motifs diffusants sont penchés, éventuellement variables, et de profondeur variable, ce qui rend très difficile une fabrication industrielle sur de grande surface et à bas coûts.

La présente invention a trait à un réseau de surface limitant la séparation apparente des différentes couleurs de la lumière et menant à un éclairage de sensiblement même coloration que la lumière incidente, sans irisation apparente prononcée de la lumière déviée (généralement sur le plafond). Ainsi, si la lumière incidente est sensiblement incolore à l'oeil nu, la lumière émergente l'est également. On souhaite que la lumière déviée le soit selon un seul ordre du réseau (généralement l'ordre 1 du réseau), car sinon cela produirait différentes zones séparées d'éclairage (au plafond si la lumière est projetée au plafond) dont certaines ne seraient pas judicieusement placées et de plus, cela pourrait être inesthétique.
La figure 1 représente un substrat transparent en coupe muni à sa surface d'un ensemble de dix sous-réseaux selon l'invention.
La figure 2 montre un vitrage muni dans sa partie supérieure d'un ensemble de treize sous-réseaux selon l'invention.

Le substrat selon l'invention est transparent, ce qui signifie que l'on peut alors voir de façon nette à travers lui et ce, quel que soit l'angle de vision pour l'observateur.

Selon l'invention, on crée à la surface d'un substrat transparent et selon une direction parallèle à ladite surface un réseau qui est un ensemble diffusant la lumière comprenant au moins 10 sous-réseaux juxtaposés de lignes parallèles de motifs, lesdits motifs étant séparés par des domaines d'indice de réfraction différent de celui des motifs, chaque sous-réseau comprenant au moins 20 motifs identiques successifs répétés à distance égale selon une période p, ladite période variant de manière non-monotone d'un bord à l'autre de l'ensemble des sous-réseaux.

Dans le cadre de la présente demande, la notion de diffusion s'applique à la lumière déviée et concerne le réseau entier (comprenant tous les sous-réseaux).

Selon l'invention, on crée à la surface d'un substrat transparent et selon une direction parallèle à ladite surface un réseau comprenant une alternance d'au moins deux indices de réfraction R1 et R2 par des motifs élémentaires linéaires d'indice R1 séparés par des domaines élémentaires linéaires d'indice R2, lesdits motifs et domaines étant géométriquement complémentaires entre eux. Les motifs et domaines sont complémentaires sur le plan géométrique car ils s'imbriquent les uns dans les autres. C'est pourquoi la seule définition de la géométrie des motifs d'indice R1 est suffisante puisque les domaines d'indice R2 remplissent tout l'espace situé entre les motifs. On définit la géométrie des motifs notamment à partir de leur largeur L parallèlement au substrat, de la période avec laquelle ils se répètent à l'intérieur d'un sous-réseau, et de leur profondeur h. L'usage du terme « période » indique bien qu'à l'intérieur de chaque sous-réseau, les motifs sont identiques et la distance entre motifs voisins est constante et égale à cette période.

Selon l'invention, le réseau contient de façon juxtaposée une multiplicité de sous-réseaux aux périodes différentes, ces sous-réseaux étant placés dans le réseau de façon dispersée (sur le plan de leur période propre) de façon à brouiller les différents rayonnements émergents et aboutir à un éclairage neutre et sans coloration particulière.

Selon l'invention, la période p de sous-réseaux voisins varie de façon non-monotone d'un bord à l'autre du réseau (c'est-à-dire de l'ensemble des sous-réseaux). Le terme « non-monotone » signifie que cette période ne fait pas qu'augmenter ou que diminuer quand on va d'un bord du réseau à l'autre bord. Au contraire, cette période p alterne de plus fortes valeurs avec de plus faibles valeurs quand on passe d'un bord du réseau à l'autre.

La période p varie d'un bord à l'autre du réseau, autour d'une période moyenne Pₘ qui est définie comme étant le rapport de la somme des distances entre barycentres de motifs voisins sur le nombre total de motifs de tout le réseau, c'est-à-dire l'ensemble de tous les sous-réseaux juxtaposés. Notamment, de préférence, la période p est au moins n fois supérieure à Pₘ et au moins n fois inférieure à Pₘ, deux sous-réseaux de période supérieure à Pₘ étant séparés par au moins un sous-réseau de période inférieure à Pₘ, deux sous-réseaux de période inférieure à Pₘ étant séparés par au moins un sous-réseau de période supérieure à Pₘ, n étant un nombre entier supérieur ou égal à 2, notamment supérieur ou égal à 3, voire supérieur ou égal à 4 et même supérieur ou égal à 5. Ceci signifie que p s'écarte de Pₘ au moins 2n fois, notamment d'un écart minimal y, pour dépasser n fois la valeur Pₘ + y et tomber n fois sous la valeur Pₘ - y, la valeur y dépendant de la longueur d'onde que l'on cherche à dévier, mais étant généralement d'au moins 5% Pₘ et plus généralement d'au moins 10% Pₘ.

La variation de p d'un bord à l'autre du réseau peut être encore plus accentuée. La fluctuation de p quand on va d'un bord à l'autre du réseau peut aussi être déterminée et suivre par exemple une courbe sinusoïdale autour de la valeur Pₘ. De façon préférée, cette fluctuation est cependant indépendante. Elle peut même être aléatoire. Dans ce dernier cas, la courbe représentant la distribution de p autour de Pₘ est du type courbe de Gauss.

La période p varie autour de Pₘ en restant généralement à l'intérieur d'une plage entre Pₘ + x et Pₘ - x , la valeur x dépendant de la longueur d'onde que l'on cherche à dévier. Généralement, x est d'au plus 50% Pₘ et plus généralement d'au plus 20% Pₘ.

Chaque sous-réseau comprend au moins 20 motifs successifs identiques se répétant selon une période p, distance entre deux motifs successifs. Chaque sous-réseau comprend au total plus généralement au moins 100 motifs successifs identiques et même au moins 500 motifs successifs identiques.

Chaque sous-réseau a généralement une hauteur entre 0,1 mm et 12 mm, et plus généralement entre 3 et 10 mm. Cette hauteur correspond au produit de la période caractéristique du sous-réseau considéré par le nombre de motifs contenus dans ledit sous-réseau.

Le réseau selon l'invention contient généralement 40 à 10 000 et plus généralement 100 à 5000 sous-réseaux juxtaposés et dont les lignes de motif sont parallèles.

La période moyenne Pₘ a une valeur de l'ordre de la longueur d'onde du rayonnement que l'on cherche à dévier. Il en est de même pour la période p de chaque sous-réseau.

Rappelons que les rayonnements ont sensiblement les longueurs d'onde suivantes :

| | |
|---|---|
| Ultra-violet : | 150 à 400 nm |
| Visible : | 400 à 800 nm |
| Infrarouge: | 800 nm à 100 µm |

Quel que soit le sous-réseau, on choisit sa période p entre 1/2 et 2 fois la longueur d'onde que l'on cherche à dévier. La valeur p est donc toujours comprise entre 75 nm et 200 µm. En général, quel que soit le sous-réseau, p est compris entre 100 nm et 20 µm.

Si c'est la lumière visible que l'on cherche à dévier, on choisi de préférence les p des sous-réseaux (ainsi donc que Pₘ) dans la plage de 200 à 600 nm et de préférence dans la plage de 300 à 500 nm.

Bien que l'on n'exclut pas qu'ils soient inclinés, les motifs sont généralement non inclinés (l'homme du métier dirait « blazés », néologisme issus de l'anglais « blazed »), c'est-à-dire symétriques par rapport à la droite perpendiculaire au substrat et passant par le barycentre du motif.

Généralement, la largeur des motifs L va de 0,1 Pₘ à 0,9 Pₘ et de préférence de 0,4 Pₘ à 0,6 Pₘ.

Généralement, le rapport de la largeur L sur la profondeur des motifs va de 0,2 à 5 et de préférence de 0,4 à 2.

Si l'on suit une ligne parallèle au substrat passant par les barycentres des motifs, on passe successivement par l'indice de réfraction R1 des motifs et l'indice de réfraction R2 des domaines entre motifs. Notamment, les motifs peuvent être en verre et les domaines peuvent être de l'air. On est dans ce cas lorsque l'on produit à titre de motifs des excroissances en verre à la surface d'un substrat en verre. L'air ambiant remplit l'espace entre les motifs et constitue naturellement les domaines. Dans ce cas, l'indice R1 est celui du verre, par exemple 1,5 et l'indice R2 est celui de l'air, c'est-à-dire 1. Dans cet exemple, on a réalisé un relief de motif à la surface d'un substrat. Le passage d'un motif à un domaine peut cependant correspondre à une modification d'indice de réfraction ne correspondant pas à un relief. En effet, il peut s'agir de deux matériaux différents imbriqués l'un dans l'autre de telle sorte que la surface soit lisse au toucher. On peut notamment réaliser une telle alternance de matériaux par les techniques d'échange ionique ou basées sur un effet photoréfractif et électrooptique.

Les indices de réfractions des motifs et domaines peuvent aller de 1 à 2,2. Généralement les motifs peuvent avoir leur indice de réfraction allant de 1,1 à 1,8. Généralement les domaines peuvent avoir leur indice de réfraction allant de 1 à 1,5.

La différence entre les deux indices de réfraction (ceux des motifs et des domaines) peut généralement être compris entre 0,02 et 1,5.

En général, si les domaines sont de l'air, les motifs ont un indice de réfraction supérieur à celui des domaines.

S'agissant essentiellement d'équiper des vitrages de bâtiments, on choisira les matériaux constituant lesdits vitrages (substrat, éventuelle pièce rapportée sur ledit substrat) avec une transparence satisfaisante.

Le réseau selon l'invention sert notamment en application daylighting. Dans ce cas, il est généralement placé sur un vitrage vertical de sorte que les lignes de motifs soient horizontales. On n'exclut pas que les lignes de motifs soient inclinées. Le réseau occupe généralement une hauteur d'au moins 10 cm et plus généralement une hauteur d'au moins 20 cm du vitrage, généralement sur toute la largeur du vitrage. Chaque sous-réseau a donc généralement également la largeur du vitrage entier. Généralement les sous-réseaux ont tous la même hauteur, mais on n'exclut pas qu'ils aient des hauteurs différentes.

Les motifs peuvent être situés sur la face du vitrage recevant la lumière incidente ou sur la face du vitrage ou la lumière émerge (face tournée vers l'intérieur du bâtiment).

Le réseau selon l'invention peut généralement être réalisé par les techniques suivantes : embossage, photolithographie, transfert, échange ionique, effet photoréfractif ou electrooptique.

Un premier procédé comprend l'embossage d'une couche sol-gel ou polymère rapportée sur une feuille transparente (substrat), notamment en verre. L'embossage est une déformation plastique ou viscoplastique réalisée par contact avec un élément structuré, consistant en un rouleau par exemple, et sur lequel est simultanément exercée une pression. Les couches sol-gel utilisables sont en général des couches liquides de précurseur d'oxyde minéral tel que SiO₂, Al₂O₃, TiO₂ ..., par exemple en solution dans un mélange eau-alcool. Ces couches durcissent en séchant, avec ou sans moyen auxiliaire de chauffage. Citons comme précurseur de SiO₂ le tétraéthoxysilane (TEOS) ou le méthyltriéthoxysilane (MTEOS). Des fonctions organiques peuvent être incluses dans ces précurseurs et la silice finalement obtenue. A titre d'exemple, des silanes fluorés ont été décrits dans le EP799873 pour obtenir un revêtement hydrophobe. L'embossage peut aussi être réalisé sur des couches polymères comme
le polyéthylène téréphtalate (PET),
le polystyrène,
les polyacrylates tels que poly(méthacrylate de méthyle), poly(acrylate de butyle), poly(acide méthacrylique), poly(méthacrylate de 2-hydroxyéthyle) et leur copolymères,
les polyépoxy(méth)acrylates,
les polyuréthane(méth)acrylates,
les polyimides tels que polyméthylglutarimide,
les polysiloxanes tels que polyépoxysiloxanes,
les poly (éthers vinyliques),
les polybisbenzocyclobutènes ...
seuls ou en copolymères ou mélanges de plusieurs d'entre eux.

L'embossage peut être suivi dans certains cas d'une gravure. La couche sol-gel ou polymère embossée peut y être attaquée jusqu'à réapparition du matériau de la feuille transparente sous-jacente, en premier lieu dans les parties profondes desdits motifs en relief, puis progressivement jusque dans leurs parties hautes. Ainsi la surface plus ou moins irrégulière obtenue à la fin de la gravure peut être formée entièrement dans la couche sol-gel ou polymère rapportée, ou en partie dans celle-ci et en partie dans ladite feuille transparente, ou encore entièrement dans cette dernière. Les conditions de la gravure doivent être réglées pour que cette surface qui en résulte présente des motifs en relief de dimensions satisfaisant la définition du dispositif de l'invention.

On peut citer comme procédés de gravure :
une gravure chimique, par un acide notamment,
une gravure ionique réactive (Reactive Ion (Beam) Etching = RI(B)E),
une gravure par plasma (Inductively Coupled Plasma = ICP).

Il est à remarquer que le procédé d'embossage permet le traitement rapide de relativement vastes surfaces, à un coût modéré.

Un autre procédé possible de fabrication du réseau selon l'invention comprend une photolithographie. Ce procédé consiste généralement à munir d'abord le substrat transparent d'une première couche dans laquelle pourront être formés lesdits motifs en relief. Cette première couche est comparable à la couche sol-gel ou polymère rapportée du procédé d'embossage. Elle peut d'ailleurs être de la même nature que celle-ci, notamment en silice. Dans une deuxième étape du procédé, on dépose une deuxième couche d'une résine photosensible. Celle-ci est durcie en des localisations définies, par exposition à un rayonnement ciblé. Ainsi est constitué un masque, au-dessus de la première couche à graver, après élimination des parties non durcies de la résine photosensible. Puis on grave, de la même manière que décrit ci-dessus relativement à l'étape facultative du procédé par embossage. D'éventuels résidus de la résine photosensible peuvent être éliminés.

Un autre procédé de fabrication du réseau selon l'invention comprend le transfert d'une couche nanostructurée. Une couche en adhésion sur un premier support est mise en adhésion sur un second, de manière à constituer un dispositif selon l'invention. La couche peut être en matière plastique ou similaire.

Un autre procédé utilisable repose sur un échange ionique, par exemple d'ions Na⁺ par des Ag⁺ dans un verre minéral.

Enfin, on peut utiliser un effet photoréfractif, selon lequel une lumière modulée induit une modulation spatiale de l'indice de réfraction du matériau (exemple : cristal photoréfractif en titanate de Baryum). On peut également utiliser un effet électrooptique selon lequel un champ électrique induit une modulation spatiale de l'indice de réfraction du matériau.

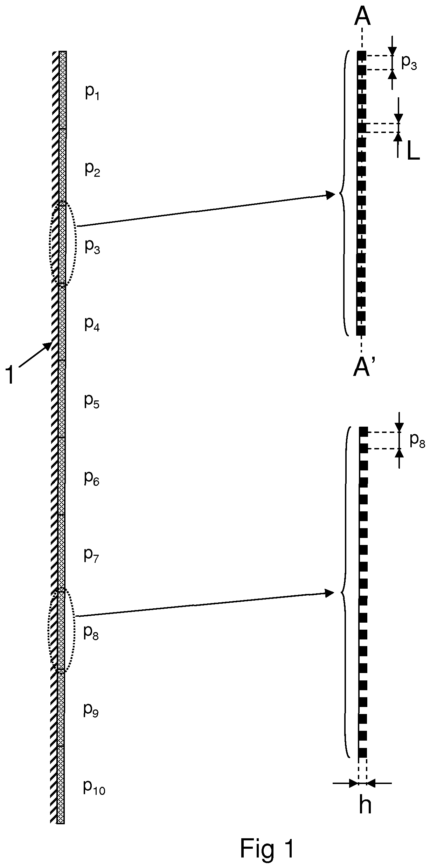

La figure 1 représente un substrat transparent en coupe muni à sa surface d'un réseau diffusant selon l'invention. Ce réseau est situé dans la partie supérieure d'un vitrage d'immeuble. Le substrat 1 comprend à sa surface une multiplicité de lignes parallèles horizontales de motifs à section carrée. Les motifs sont donc linéaires et parallèles dans une direction perpendiculaire à la figure 1. Ces motifs sont donc des parallélépipèdes de longueur correspondant sensiblement à la largeur du vitrage, de largeur L et de profondeur h . Le réseau est constitué de 10 sous-réseaux successifs juxtaposés ayant chacun sa période propre numérotée de p₁ à p₁₀. On a agrandi deux des sous-réseaux, ceux de période p3 et p8, ce qui permet de voir les motifs par leur section. La section des motifs est carrée (L = h) et la distance entre deux points identiques de motifs voisins (par exemple leurs barycentres) est respectivement p₃ et p₈. Le barycentre d'un motif sur la figure 1 est au point d'intersection des diagonales du carré représentant la section dudit motif. Les deux sous-réseaux agrandis contiennent chacun 20 motifs. On voit que dans chaque sous-réseau les motifs sont identiques et distants d'une valeur donnée définissant une période, la période variant d'un sous-réseau à l'autre, et notamment p₈ est supérieur à p₃. Les motifs ont un indice de réfraction R1. Ils sont séparés par de l'air qui constitue donc les domaines entre motifs. Ces domaines d'air ont un indice de réfraction R2, généralement environ de valeur 1. La ligne virtuelle AA' en pointillé passe par les barycentres des motifs du sous-réseau de période p3.

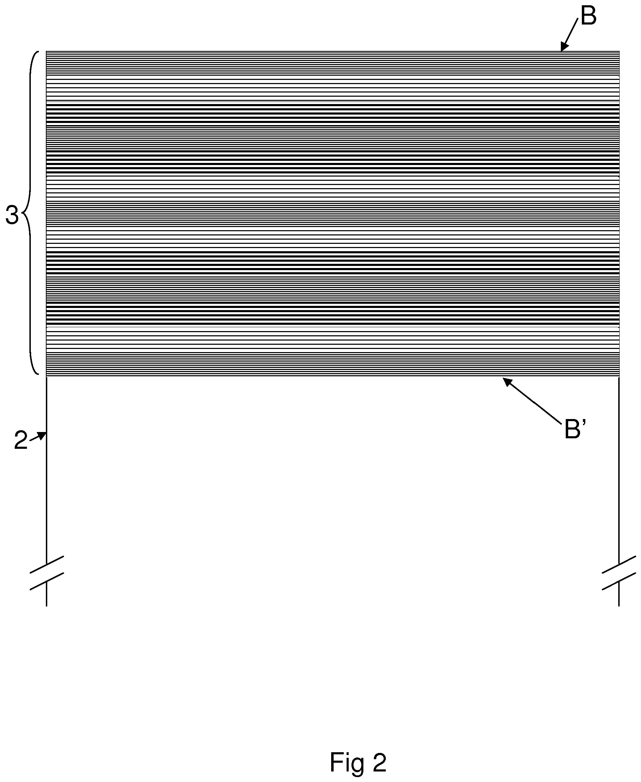

La figure 2 montre un vitrage 2 en verre minéral pouvant être monté verticalement dans une fenêtre de bâtiment. La partie supérieure du vitrage est muni d'un ensemble de treize sous-réseaux 3 selon l'invention. Les motifs des sous-réseaux sont représentés par des lignes horizontales. Les sous-réseaux ont tous la largeur entière du vitrage et sont de taille identique en hauteur. On voit que les sous-réseaux sont juxtaposés les uns sous les autres dans un ordre dispersé quant à leur période quand on va d'un bord de l'ensemble de sous-réseau B à l'autre bord de l'ensemble de sous-réseaux B'. Bien entendu, il s'agit d'une représentation purement qualitative pour montrer le placement des sous-réseaux les uns par rapport aux autres et sur le vitrage. Les tailles des sous-réseaux et des lignes de motifs ne correspondent pas à la réalité.

### EXEMPLE 1 (comparatif)

On dépose une couche de 360 nm d'épaisseur en silice par sol-gel sur les 50 cm situés en partie supérieure d'un vitrage de marque planilux commercialisé par Saint-Gobain Glass France. De façon connue de l'homme du métier, on a réalisé une texture de motifs linéaires en relief de profondeur 360 nm, de largeur 200 nm. Les motifs sont perpendiculaires au plan du film. L'écart entre les barycentres de ces motifs passait progressivement de 300 à 500 nm quand on passe d'un bord du réseau à l'autre bord (soit en parcourant les 50 cm de réseau). La vitre est alors placée comme fenêtre de mur extérieur. La vitre redirige de la lumière provenant de l'extérieur vers le plafond, mais on distingue des irisations.

### EXEMPLE 2

On procède comme pour l'exemple 1, sauf que la texture est constituée de 50 sous-réseaux de périodicité moyenne 400 nm. La période variait d'un sous-réseau à l'autre de façon aléatoire entre 300 et 500 nm. Aucune irisation n'est observée.

## Revendications

1. Substrat transparent (1) comprenant à sa surface un ensemble diffusant la lumière comprenant des sous-réseaux juxtaposés de lignes parallèles de motifs, lesdits motifs étant séparés par des domaines d'indice de réfraction différent de celui des motifs, chaque sous-réseau comprenant au moins 20 motifs identiques successifs répétés à distance égale selon une période p, **caractérisé en ce que** le nombre de sous-réseaux juxtaposés est au moins 10 et **en ce que** ladite période varie de manière non-monotone d'un bord à l'autre de l'ensemble des sous-réseaux.

2. Substrat (1) selon la revendication précédente, **caractérisé en ce que**, si Pₘ est la période moyenne pour l'ensemble des sous-réseaux, la période p est au moins n fois supérieure à Pₘ et au moins n fois inférieure à Pₘ, deux sous-réseaux de période supérieure à Pₘ étant séparés par au moins un sous-réseau de période inférieure à Pₘ, deux sous-réseaux de période inférieure à Pₘ étant séparés par au moins un sous-réseau de période supérieure à Pₘ, n étant un nombre entier supérieur ou égal à 2.

3. Substrat (1) selon la revendication précédente, **caractérisé en ce que** p s'écarte de Pₘ au moins 2n fois d'un écart minimal y, pour dépasser n fois la valeur Pₘ + y et tomber n fois sous la valeur Pₘ - y, la valeur y étant d'au moins 5% Pₘ.

4. Substrat (1) selon la revendication précédente, **caractérisé en ce que** y est d'au moins 10% Pₘ.

5. Substrat (1) selon l'une des revendications 2 à 4, **caractérisé en ce que** n est supérieur ou égal à 3.

6. Substrat (1) selon l'une des revendications 2 à 5, **caractérisé en ce que** p varie autour de Pₘ en restant entre Pₘ + x et Pₘ - x, x étant d'au plus 50% Pₘ.

7. Substrat (1) selon la revendication précédente, **caractérisé en ce que** x est d'au plus 20% Pₘ.

8. Substrat (1) selon l'une des revendications précédentes, **caractérisé en ce que** chaque sous-réseau comprend au moins 20 motifs.

9. Substrat (1) selon l'une des revendications précédentes, **caractérisé en ce que** l'ensemble comprend 40 à 10 000 sous-réseaux.

10. Substrat (1) selon l'une des revendications précédentes, **caractérisé en ce que** pour tout sous-réseau de l'ensemble, p est compris entre 75 nm et 200 µm.

11. Substrat (1) selon la revendication précédente, **caractérisé en ce que** pour tout sous-réseau de l'ensemble, p est compris entre 100 nm et 20 µm.

12. Fenêtre comprenant un substrat (1) de l'une des revendications précédentes

13. Utilisation d'un substrat (1) de l'une des revendications de substrat (1) précédentes pour rediriger la lumière solaire vers un plafond.

## Patentansprüche

1. Transparentes Substrat (1), das auf seiner Oberfläche eine lichtstreuende Gesamtheit umfasst, umfassend aneinandergereihte Subnetze paralleler Linien von Motiven, wobei die Motive von Bereichen mit einem Brechnungsindex getrennt sind, der sich von dem der Motive unterscheidet, wobei jedes Subnetz mindestens 20 aufeinanderfolgende identische Motive umfasst, die sich in gleichem Abstand gemäß einer Periode p wiederholen, **dadurch gekennzeichnet, dass** die Anzahl aneinandergereihter Subnetze mindestens 10 beträgt und dass die Periode nicht-monoton von einem Rand zum anderen der Gesamtheit der Subnetze variiert.

2. Substrat (1) nach vorangehendem Anspruch, **dadurch gekennzeichnet, dass**, wenn Pₘ die durchschnittliche Periode für die Gesamtheit der Subnetze ist, die Periode p mindestens n Mal größer als Pₘ und mindestens n Mal kleiner als Pₘ ist, wobei zwei Subnetze größerer Periode als Pₘ von mindestens einem Subnetz kleinerer Periode als Pₘ getrennt sind, wobei zwei Subnetze kleinerer Periode als Pₘ von mindestens einem Subnetz größerer Periode als Pₘ getrennt sind, wobei n eine Ganzzahl größer oder gleich 2 ist.

3. Substrat (1) nach vorangehendem Anspruch, **dadurch gekennzeichnet, dass** sich p von Pₘ mindestens 2n Mal eines Mindestabstands y beabstandet, um n Mal den Wert Pₘ + y zu überschreiten und n Mal unter den Wert Pₘ - y zu fallen, wobei der Wert y mindestens 5 % Pₘ beträgt.

4. Substrat (1) nach vorangehendem Anspruch, **dadurch gekennzeichnet, dass** y mindestens 10 % Pₘ beträgt.

5. Substrat (1) nach einem der Ansprüche 2 bis 4, **dadurch gekennzeichnet, dass** n größer oder gleich 3 ist.

6. Substrat (1) nach einem der Ansprüche 2 bis 5, **dadurch gekennzeichnet, dass** p um Pₘ variiert und dabei zwischen Pₘ + x und Pₘ - x bleibt, wobei x höchstens 50 % Pₘ beträgt.

7. Substrat (1) nach vorangehendem Anspruch, **dadurch gekennzeichnet, dass** x höchstens 20 % Pₘ beträgt.

8. Substrat (1) nach einem der vorangehenden Ansprüche, **dadurch gekennzeichnet, dass** jedes Subnetz mindestens 20 Motive umfasst.

9. Substrat (1) nach einem der vorangehenden Ansprüche, **dadurch gekennzeichnet, dass** die Gesamtheit 40 bis 10.000 Subnetze umfasst.

10. Substrat (1) nach einem der vorangehenden Ansprüche, **dadurch gekennzeichnet, dass** für jedes Subnetz der Gesamtheit p zwischen 75 nm und 200 µm inklusive beträgt.

11. Substrat (1) nach vorangehendem Anspruch, **dadurch gekennzeichnet, dass** für jedes Subnetz der Gesamtheit p zwischen 100 nm und 20 µm inklusive beträgt.

12. Fenster, umfassend ein Substrat (1) nach einem der vorangehenden Ansprüche.

13. Verwendung eines Substrats (1) nach einem der vorangehenden Ansprüche eines Substrats (1), um das Sonnenlicht zu einer Decke umzulenken.

## Claims

1. A transparent substrate comprising, on its surface, a light-diffusing array comprising at least 10 juxtaposed sub-gratings of parallel lines of features, said features being separated by domains of refractive index different from that of the features, each sub-grating comprising at least 20 repeated successive identical features of equal separation with a period p, said period varying non-monotonically from one edge of the sub-grating array to the other.

2. The substrate as claimed in the preceding claim, **characterized in that**, if Pₘ is the mean period for the array of sub-gratings, the period p is at least n times greater than Pₘ and at least n times smaller than Pₘ, two sub-gratings of period greater than Pₘ being separated by at least one sub-grating of period smaller than Pₘ, two sub-gratings of period smaller than Pₘ being separated by at least one sub-grating of period greater than Pₘ, n being an integer equal to or greater than 2.

3. The substrate as claimed in the preceding claim, **characterized in that** p differs from Pₘ at least 2n times by a minimal amount y, so as to exceed n times the value Pₘ+y and fall n times below the value Pₘ-y, the value y being at least 5% Pₘ.

4. The substrate as claimed in the preceding claim, **characterized in that** y is at least 10% Pₘ.

5. The substrate as claimed in one of claims 2 to 4, **characterized in that** n is greater than or equal to 3.

6. The substrate as claimed in one of claims 2 to 5, **characterized in that** p varies around Pₘ while remaining between Pₘ+x and Pₘ-x, x being at most 50% Pₘ.

7. The substrate as claimed in the preceding claim, **characterized in that** x is at most 20% Pₘ.

8. The substrate as claimed in one of the preceding claims, **characterized in that** each sub-grating comprises at least 20 features.

9. The substrate as claimed in one of the preceding claims, **characterized in that** the array comprises 40 to 10 000 sub-gratings.

10. The substrate as claimed in one of the preceding claims, **characterized in that**, for any sub-grating of the array, p is between 75 nm and 200 µm.

11. The substrate as claimed in the preceding claim, **characterized in that**, for any sub-grating of the array, p is between 100 nm and 20 µm.

12. A window having a substrate of one of the preceding claims.

13. The use of a substrate of one of the preceding substrate claims for redirecting sunlight to a ceiling.
